Europäisches Patentamt

European Patent Office

Office européen des brevets

(11) Veröffentlichungsnummer: **0 100 937**
**B1**

# (12) EUROPÄISCHE PATENTSCHRIFT

(45) Veröffentlichungstag der Patentschrift:
**17.09.86**

(51) Int. Cl.⁴: **A 61 C 5/06,** B 65 D 81/32

(21) Anmeldenummer: **83107117.0**

(22) Anmeldetag: **21.07.83**

(54) **Mischbehälter.**

(30) Priorität: **22.07.82 DE 3227432**

(43) Veröffentlichungstag der Anmeldung:
**22.02.84 Patentblatt 84/8**

(45) Bekanntmachung des Hinweises auf die Patenterteilung:
**17.09.86 Patentblatt 86/38**

(84) Benannte Vertragsstaaten:
**AT BE CH DE FR GB IT LI NL SE**

(56) Entgegenhaltungen:
**DE - A - 1 566 222**
**DE - A - 2 931 262**
**DE - B - 1 287 251**
**FR - A - 1 056 507**
**US - A - 4 182 447**

(73) Patentinhaber: **Etablissement Dentaire IVOCLAR,
FL-9494 Schaan (LI)**

(72) Erfinder: **Frick, Hansjörg, Tanzplatz 26, FL-9494 Schaan
(LI)**

(74) Vertreter: **Reitzner, Bruno, Dr. et al, Patentanwälte
Dipl.-Ing. R. Splanemann Dr. B. Reitzner Tal 13,
D-8000 München 2 (DE)**

## Beschreibung

Die Erfindung geht aus von einem Mischbehälter für die getrennte Aufbewahrung und Vermischung von miteinander reagierenden Substanzen zur Herstellung von Dentalpräparaten, insbesondere von Amalgamen, enthaltend einen als Mischkammer ausgebildeten ersten Behälterteil, in welchem sich eine im allgemeinen pulverförmige Substanz befindet, einen zweiten, abnehmbaren Behälterteil, in welchem sich, durch eine Trennwand von der Mischkammer getrennt, eine fliessfähige Substanz befindet, und ein in der Mischkammer bewegliches langgestrecktes Pistill, wobei die Trennwand von der der Mischkammer zugewandten Wand eines mit der fliessfähigen Substanz gefüllten und in dem zweiten Behälterteil angeordneten zerstörbaren Folienkissen gebildet wird und die Reissfestigkeit des Folienkissens und die Grösse des Druckimpulses, den das Pistill beim Schütteln des Mischbehälters in einer Schwingmischvorrichtung erhält, so aufeinander abgestimmt sind, dass das Folienkissen beim Auftreffen des Pistills zerstört wird.

Ein derartiger Mischbehälter ist z.B. aus der US-A-4 182 447 bekannt. Bei diesem Mischbehälter ist jedoch der langgestreckte Pistill nicht mit Führungselementen versehen, was zur Folge hat, dass der Pistill bei einer Zerstörung der Trennwand jedesmal an einer anderen Stelle auftrifft. Dadurch ist eine einfache und quantitative Entleerung des Folienkissens nicht gewährleistet.

Weitere bekannte Mischbehälter (vgl. beispielsweise DE-B-12 87 251) enthalten einen als Mischkammer ausgebildeten ersten Behälterteil, in welchem sich eine im allgemeinen pulverförmige Substanz, wie Silberpulver, befindet. In einem zweiten, abnehmbaren Behälterteil befindet sich, durch eine Trennwand von der Mischkammer abgetrennt, eine fliessfähige Substanz. Die Trennwand ist üblicherweise Teil eines zerstörbaren Folienkissens, in das die fliessfähige Substanz, z.B. Quecksilber, eingesiegelt ist und das dicht gegen eine gelochte Abtrennung zwischen den Behälterteilen anliegt. Durch Gegeneinanderbewegen der Behälterteile kann das Folienkissen zerstört werden, wodurch eine Verbindung zwischen den beiden Kammern geschaffen wird. Die fliessfähige Substanz wird hierbei in die Mischkammer gespritzt und dort mit der pulverförmigen Substanz gründlich vermischt, was vorzugsweise dadurch geschehen kann, dass der Mischbehälter in die Gabel einer automatischen Schwingmischvorrichtung, einen sogenannten Amalgammischer, eingespannt wird.

Derartige Mischbehälter haben sich in der Praxis im allgemeinen bewährt, haben aber noch gewisse Nachteile. Die als Auflage- und Gegendruckfläche verwendete gelochte Abtrennung stellt ein zusätzliches Bauteil dar, welches die Herstellungskosten des Mischbehälters erhöht. Ausserdem ist es zur quantitativen Entfernung der fliessfähigen Substanz aus dem Folienkissen erforderlich, dass die Druckfläche der gelochten Abtrennung und die innere Stirnwand des zweiten Behälterteils möglichst komplementär ausgebildet sind. Dies kann in der Praxis dadurch ausgeglichen werden, dass man eine zusätzliche Gummischeibe zwischen Deckelwand und Folienkissen legt. Ferner ist zum Öffnen und zum quantitativen Entleeren des Folienkissens ein separates Instrument notwendig.

Es sind ferner Mischbehälter der vorstehend definierten Gattung bekannt, die in der Mischkammer ein bewegliches langgestrecktes Pistill enthalten. Ein derartiger Mischbehälter ist beispielsweise in der DE-A-29 31 262 beschrieben. Die Trennwand ist hierbei als bewegliches flexibles Trennorgan in Form einer Scheibe oder eines Stopfens ausgebildet, wobei der Rand des Trennorgans an der Innenwand des ersten Behälterteils abdichtend anliegt. Da die fliessfähige Substanz nicht in eine Folie eingesiegelt ist, ist eine sichere getrennte Aufbewahrung der miteinander reagierenden Substanzen nicht gewährleistet. Das in der Mischkammer befindliche Pistill treibt das Trennorgan gegen die Deckelwand und dient zum Vermischen der beiden Substanzen nach der Überführung der fliessfähigen Substanz in die Mischkammer.

Ein anderer Mischbehälter dieser Gattung, der in der DE-A-15 66 222 beschrieben ist, enthält zwei durch eine Trennfolie getrennte, gegeneinander verschiebbare Behälterteile, in denen sich eine fliessfähige bzw. eine pulverförmige Substanz (Quecksilber bzw. Metallpulver) befindet. In dem kappenförmig ausgestalteten zweiten Behälterteil befindet sich zusammen mit der pulverförmigen Substanz ein Pistill, das beim Gegeneinanderverschieben der Behälterteile die mit Schwächungslinien versehene Trennfolie zerreisst bzw. zerschneidet, wodurch sich das Metallpulver mit dem Quecksilber vereinigen kann. Die Vermischung dieser Substanzen erfolgt in einer Schwingmischvorrichtung.

Ein derartiger Mischbehälter hat den Nachteil, dass die fliessfähige Substanz nicht absolut gasdicht eingeschlossen werden kann und dass die Trennfolie bereits bei einer unbeabsichtigten Gegeneinanderbewegung der Behälterteile reissen kann. Ausserdem können Reste der Trennfolie in das fertige Gemisch gelangen.

Der Erfindung liegt die Aufgabe zugrunde, einen Mischbehälter der vorstehend definierten Gattung zur Verfügung zu stellen, der einfach aufgebaut ist, in welchem die fliessfähige Substanz vor Gebrauch völlig sicher gelagert ist und der eine quantitative Überführung der fliessfähigen Substanz in die Mischkammer und eine gute Durchmischung der Substanzen in der Mischkammer ermöglicht. Ferner soll kein zusätzliches Instrument zur quantitativen Überführung der fliessfähigen Substanz mehr erforderlich sein.

Gegenstand der Erfindung ist somit ein Mischbehälter der eingangs definierten Gattung, der dadurch gekennzeichnet ist, dass das Pistill mindestens in dem dem Folienkissen zugewandten Endbereich mit Führungselementen versehen ist und dass die der Trennwand zugewandte Stirnseite des Pistills komplementär zur inneren Stirnwand des zweiten Behälterteils ausgebildet ist.

Die Reissfestigkeit des zerstörbaren Folienkissens ist durch die Dicke sowie durch die Materialeigenschaften (z.B. Elastizität, Sprödigkeit usw.) bestimmt und kann beispielsweise auch dadurch beeinflusst werden, dass die der Mischkammer zugewandte Trennwand des Folienkissens mit einer Sollbruchstelle versehen wird.

Der Begriff «Druckimpuls» ist etwas willkürlich in Anlehnung an den physikalischen Begriff «Impuls» gewählt. Er ist eine Funktion der Masse des Pistills der (negativen) Beschleunigung des Pistills beim Auftreffen auf das Folienkissen und der Zeit, während der das Pistill auf das Folienkissen einwirkt. Die beiden letzteren Parameter werden durch die jeweils verwendete Schwingmischvorrichtung bestimmt. Bewegt sich die Schwingmischvorrichtung schnell und mit einer hohen Amplitude, so ist die Kraft, die ein Pistill auf das Folienkissen ausübt, wenn es beim Auftreffen abgebremst wird, grösser als bei Verwendung einer langsam laufenden Mischvorrichtung mit geringer Schwingungsamplitude. Die Einwirkungszeit des Pistills auf das Folienkissen hängt im wesentlichen von der Dauer des Schwingmischvorganges und der Schwingungsfrequenz der Vorrichtung ab. Die Grösse des durch das Pistill auf das Folienkissen ausgeübten Druckimpulses ist ferner eine umgekehrte Funktion der Schlagfläche. So kann der Druckimpuls z.B. dadurch erhöht werden, dass das Pistill an der dem Folienkissen zugewandten Stirnseite mit einer Erhebung, vorzugsweise mit einer Spitze, versehen wird, die auch kegelförmig ausgebildet sein kann. Andererseits wird der Druckimpuls verkleinert, wenn das Pistill mit einer grösseren Fläche auf das Folienkissen auftrifft. In diesem Fall muss entweder die Masse des Pistills und/oder die Geschwindigkeit, die Amplitude, die Frequenz bzw. die Dauer der Schwingbewegung erhöht werden, um ein Folienkissen mit der gleichen Folienstärke und den gleichen Materialeigenschaften zu zerstören.

Die angegebenen Beziehungen können leicht empirisch festgestellt werden. Wenn beispielsweise gefunden wird, dass ein vorgegebenes Folienkissen durch ein Pistill bestimmter Masse bei einer bestimmten Schwingungsintensität und -dauer nicht zerstört wird, kann die Masse des Pistills erhöht werden bzw. das Pistill kann mit einer Spitze versehen werden (Verkleinerung der Einwirkungsfläche). Man kann aber auch die Schwingungsamplitude, die Schwingungsfrequenz und/oder die Betriebsdauer der Schwingmischvorrichtung erhöhen.

Das Pistill wirkt also erfindungsgemäss zunächst als Schlagwerkzeug. Aufgrund der heftigen Schwingbewegung schlägt das Pistill mehrfach gegen das Folienkissen, wodurch die fliessfähige Substanz vollständig in die Mischkammer überführt wird. Die Überführung ist wirksamer als wenn, wie bei einigen bekannten Mischbehältern, die Behälterteile nur einmal gegeneinander bewegt werden, da der Inhalt des Folienkissens durch die mehrfachen Schlagbewegungen des Pistills quantitativ ausgequetscht wird. Da bei dem erfindungsgemässen Mischbehälter eine Gegeneinanderbewegung der Behälterteile zum Zwecke der Zerstörung des Folienkissens nicht stattfindet, ist eine unbeabsichtigte, vorzeitige Zerstörung nicht möglich, d.h. das Folienkissen kann erst zerstört werden, wenn das Pistill in einer Schwingmischvorrichtung mit grosser Kraft gegen das Folienkissen geschleudert wird.

Das Pistill hat nach der Überführung der fliessfähigen Substanz in die Mischkammer auch die Funktion eines Mischinstruments.

Die Führungselemente stellen vorzugsweise radiale Rippen dar. Auf diese Weise kann das Pistill leicht an den Wänden der Mischkammer gleiten und daran geführt werden, ohne dass es sich verkantet, so dass es gezielt gegen die Trennfolie schlagen kann. Auf diese Weise trifft das Pistill bei den aufeinanderfolgenden Schlägen immer wieder auf dieselbe Stelle der Trennfolie, die von Schlag zu Schlag immer schwächer wird und schliesslich aufreisst.

Die der Trennwand des Folienkissens zugewandte Stirnseite des Pistills ist, wie vorstehend ausgeführt, komplementär zur inneren Stirnwand des zweiten Behälterteils ausgebildet. Wenn beispielsweise die innere Stirnwand des zweiten Behälterteils konkav gewölbt ist, ist die entsprechende Seite des Pistills konvex gewölbt. Auf diese Weise wird die Zeit, die zur Überführung der fliessfähigen Substanz in die Mischkammer erforderlich ist, verkürzt.

Bei Verwendung eines Pistills mit radialen Führungsrippen im Kopfbereich bilden die Scheitelflächen der Rippen die auf die Trennfolie einwirkenden Schlagflächen. Das Pistill kann aber auch als einfacher zylindrischer Körper oder als zylindrischer Körper mit vollem Kopfteil ausgebildet sein, wobei die auf die Trennfolie einwirkende Schlagfläche gewölbt ist, wenn die innere Stirnwand des zweiten Behälterteils entsprechend gewölbt ist.

Der erfindungsgemässe Mischbehälter hat vorzugsweise einen Innendurchmesser von etwa 7 bis 10 mm, insbesondere etwa 9 mm, und eine Gesamtlänge von etwa 30 bis 36 mm, insbesondere etwa 31 mm. Nach der Montage kann der zweite kappenförmige Behälterteil nicht mehr gegen den ersten Behälterteil verschoben werden. Der zweite kappenförmige Behälterteil mit dem Folienkissen wird auf den ersten Behälterteil in der Weise aufgestülpt, dass die Ränder des Folienkissens zwischen den beiden Behälterteilen, d.h. zwischen der Wand des zweiten Behälterteils und dem ersten Behälterteil zu liegen kommen, wodurch das Folienkissen fest eingeklemmt wird. Diese Anordnung hat verschiedene Vorteile gegenüber einer Anordnung, bei der die fliessfähige Substanz über einer starren gelochten Trennwand ausgequetscht wird; z.B. kann die fliessfähige Substanz nach dem Öffnen des Folienkissens leichter austreten. Durch die Schläge des Pistills wird das Folienkissen nach dem Mischen fest gegen den kappenförmigen Behälterteil gepresst und kann mit diesem zusammen abgezogen werden.

Eine Verschmutzung des fertig gemischten Dentalpräparates findet nicht statt; etwaige Folienreste werden durch das Pistill gegen den zweiten kappenförmigen Behälterteil gepresst, der zusammen mit dem leeren Folienkissen abgezogen werden kann. Die Endwand des ersten Behälterteils kann gekrümmt ausgestaltet sein; vorzugsweise ist sie jedoch gerade. In diesem Fall ist auch die der Endwand zugekehrte Seite des Pistills gerade, so dass die Bewegung des Pistills während des Mischvorgangs geradlinig erfolgt.

Der grösste Durchmesser des Pistills, der bei der bevorzugten Ausführungsform durch die Rippen gegeben ist, ist so zu bemessen, dass das Pistill bei der Schüttelbewegung gerade noch frei bewegt werden kann. Bevorzugte Durchmesser sind jene, die 30 bis 5%, insbesondere 15 bis 10% kleiner sind als der Innendurchmesser des Mischbehälters. Je näher der grösste Durchmesser des Pistills der Wand des Mischbehälters kommt, desto besser ist die Führung des Pistills. Die Führung des Pistills kann aber auch durch eine entsprechende Ausgestaltung des zweiten kappenförmigen Behälterteils erreicht werden.

Die Länge des Pistills richtet sich ebenfalls nach dem Innendurchmesser des Mischbehälters. Als Mindestlänge wird eine solche angesehen, die dem Innendurchmesser des Mischbehälters entspricht, da eine kürzere Längenbemessung keine Führung mehr gewährleistet. Die maximale Länge des Pistills hängt von der inneren Länge des Mischbehälters ab. Die maximale Länge des Pistills beträgt etwa 10 bis 60, vorzugsweise etwa 20 bis 40% der inneren Länge des Mischbehälters.

Bei einer bevorzugten Ausführungsform, bei der die Führungselemente radiale Rippen darstellen, sind diese am Kopfteil des Pistills angebracht, das dem Folienkissen zugewandt ist. In der Regel genügen zwei oder drei Rippen, doch wird die Führung des Pistills durch vier oder mehr Rippen verbessert. Es sind auch punktförmige oder andersartig gestaltete Führungselemente möglich.

Die an der Stirnseite des Pistills vorgesehene Erhebung ist bevorzugt als Dorn, Kegel oder Spitze ausgebildet. Sie erleichtert das Öffnen des Folienkissens. Die Länge dieser Erhebung richtet sich nach der Dicke des gefüllten Folienkissens, die nicht überschritten werden sollte. Die Minimallänge der Erhebung soll mindestens so gross wie die Stärke der Trennfolie sein. Üblicherweise beträgt die Länge der Erhebung des Pistills 0,5 bis 3 mm, vorzugsweise 1 bis 2 mm.

Als Material für das Pistill kommt grundsätzlich Metall, Glas oder Kunststoff in Betracht. Bevorzugt wird ein Kunststoff verwendet, der eine genügend hohe Schlagzähigkeit aufweisen muss, um den Schüttelbewegungen der Mischvorrichtung Stand zu halten.

Die fliessfähige Substanz befindet sich unmittelbar im kappenförmig ausgebildeten zweiten Behälterteil in einem Folienkissen. Erfindungsgemäss kann ein solches Folienkissen aus Metall oder Kunststoffolie bestehen, wobei vorzugsweise mit thermoplastischem Kunststoff beschichtete Metallfolien, insbesondere Aluminiumfolien, verwendet werden. Die Trennwände der Folienkissen sind an den Rändern miteinander verschweisst. Die bevorzugt verwendeten Folienkissen sind vollständig dampfdicht, und es kann z.B. bei Verwendung von Quecksilber als fliessfähige Substanz auch über einen längeren Zeitraum keine Oxidation stattfinden.

Ausser zur Herstellung von Amalgamen kann der erfindungsgemässe Mischbehälter auch zur Aufbewahrung und Vermischung von Substanzen zur Herstellung von beliebigen Dentalpräparaten, z.B. von Dentalzementen, wie Phosphat-, Silicat- und Carboxylat-Zementen, verwendet werden.

Eine Ausführungsform des erfindungsgemässen Mischbehälters ist nachstehend anhand der Zeichnung erläutert. Es zeigen:

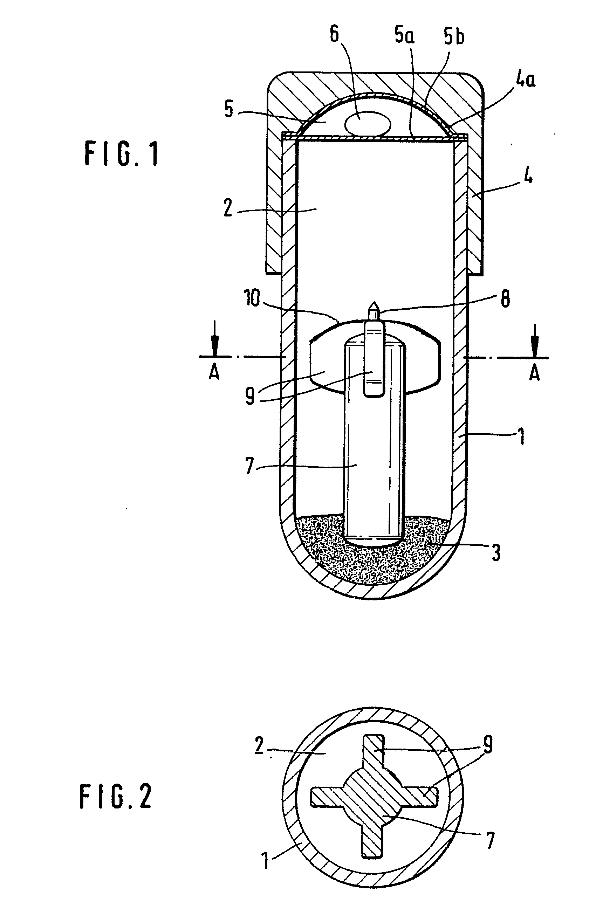

Fig. 1 einen Längsschnitt durch den erfindungsgemässen Mischbehälter;

Fig. 2 einen Schnitt durch den erfindungsgemässen Mischbehälter nach der Linie A–A von Fig. 1.

Der erfindungsgemässe Mischbehälter enthält einen ersten Behälterteil 1, der die Mischkammer 2 begrenzt. In dieser befindet sich eine im allgemeinen pulverförmige Substanz 3 (z.B. Silberpulver). Der erste Behälterteil 1 ist durch einen zweiten abnehmbaren, kappenförmigen Behälterteil 4 verschlossen, dessen innere Stirnwand 4a gewölbt ist. In diesem Behälterteil ist ein Folienkissen 5 aus einer mit thermoplastischem Kunststoff beschichteten Aluminiumfolie eingelegt. In das Folienkissen ist eine fliessfähige Substanz 6 (z.B. Quecksilber) eingesiegelt. Das Folienkissen 5 wird durch die Trennfolie 5a und 5b begrenzt, die an den Rändern in an sich bekannter Weise flüssigkeitsdicht miteinander verschweisst sind. Die Ränder sind zwischen dem ersten und dem zweiten Behälterteil festgeklemmt. Die Folie 5b schmiegt sich an die innere Stirnwand 4a des zweiten Behälterteils 4 an.

Die Folie 5a ist die dem Pistill 7 zugewandte zerstörbare Trennfolie, die auch mit einer Sollbruchstelle (nicht dargestellt) versehen sein kann. Das Pistill 7 ist im allgemeinen zylinderförmig und besitzt an der der Trennfolie 5a zugewandten Seite eine Spitze 8, mit deren Hilfe die Trennfolie 5a durchstossen wird, wenn der Mischbehälter in einer Schwingmischvorrichtung intensiv bewegt wird. Ferner weist das Pistill in dem der Trennfolie 5a zugewandten Endbereich die radialen Führungsrippen 9 auf, so dass das Pistill während des Mischvorganges gezielt bewegt werden kann, ohne dass es verkantet. Die Stirnseite des Pistills ist an der Oberseite der Rippen bei 10 entsprechend der Wölbung der Stirnwand 4a des zweiten Behälterteils 4 gewölbt, so dass die Scheitelflächen der Rippen 9 beim Auftreffen des Pistills auf das Folienkissen 5 die Trennfolie 5a gegen die Trennfolie 5b drücken, so dass zwischen diesen Folien praktisch kein Zwischenraum mehr verbleibt.

Nach Beendigung des Mischvorganges, der nur einige Sekunden dauert, wird der zweite Behälterteil 4 mit dem ausgedrückten Folienkissen 5 abgenommen, worauf zunächst das Pistill 7 und dann das gebrauchsfertige Amalgam aus der Mischkammer 2 entfernt werden.

## Patentansprüche

1. Mischbehälter für die getrennte Aufbewahrung und Vermischung von miteinander reagierenden Substanzen (3, 6) zur Herstellung von Dentalpräparaten, insbesondere von Amalgamen, enthaltend einen als Mischkammer (2) ausgebildeten ersten Behälterteil (1), in welchem sich eine im allgemeinen pulverförmige Substanz (3) befindet, einen zweiten, abnehmbaren Behälterteil (4), in welchem sich, durch eine Trennwand (5a) von der Mischkammer getrennt, eine fliessfähige Substanz (6) befindet, und ein in der Mischkammer bewegliches langgestrecktes Pistill (7), wobei die Trennwand (5a) von der Mischkammer (2) zugewandten Wand eines mit der fliessfähigen Substanz (6) gefüllten und in dem zweiten Behälterteil (4) angeordneten zerstörbaren Folienkissens (5) gebildet wird und die Reissfestigkeit des Folienkissens und die Grösse des Druckimpulses, den das Pistill (7) beim Schütteln des Mischbehälters in einer Schwingmischvorrichtung erhält, so aufeinander abgestimmt sind, dass das Folienkissen beim Auftreffen des Pistills zerstört wird, dadurch gekennzeichnet, dass das Pistill (7) mindestens in dem dem Folienkissen (5) zugewandten Endbereich mit Führungselementen (9) versehen ist und dass die der Trennwand (5a) zugewandte Stirnseite (10) des Pistills (7) komplementär zur inneren Stirnwand (4a) des zweiten Behälterteils (4) ausgebildet ist.

2. Mischbehälter nach Anspruch 1, dadurch gekennzeichnet, dass die der Mischkammer (2) zugewandte Trennwand (5a) des Folienkissens (5) mit einer Sollbruchstelle versehen ist.

3. Mischbehälter nach Anspruch 1, dadurch gekennzeichnet, dass das Pistill (7) zur Erhöhung des Druckimpulses an der dem Folienkissen zugewandten Stirnseite mit einer Erhebung (8) versehen ist.

4. Mischbehälter nach Anspruch 3, dadurch gekennzeichnet, dass die Erhebung (8) eine Spitze darstellt.

5. Mischbehälter nach Anspruch 1, dadurch gekennzeichnet, dass die Führungselemente (9) radiale Rippen darstellen.

6. Mischbehälter nach einem der Ansprüche 1 bis 5, dadurch gekennzeichnet, dass die Ränder des Folienkissens (5) zwischen dem ersten (1) und dem zweiten (4) kappenförmigen Behälterteil eingeklemmt sind.

7. Mischbehälter nach einem der Ansprüche 1 bis 6, dadurch gekennzeichnet, dass das Folienkissen (5) aus mit thermoplastischem Kunststoff beschichteter Aluminiumfolie hergestellt ist.

## Revendications

1. Récipient mélangeur pour conserver séparément et mélanger des substances (3, 6) réagissant entre elles pour la fabrication de produits dentaires, notamment d'amalgames, comprenant une première partie (1) réalisée sous la forme d'une chambre de mélange (2), dans laquelle se trouve une substance (3) en général pulvérulente, une seconde partie (4) amovible dans laquelle se trouve une substance (6) coulante, séparée de la chambre de mélange par une cloison de séparation (5a), et un pilon (7) allongé, mobile dans la chambre de mélange, la cloison de séparation (5a) étant formée par la paroi, située du côté de la chambre de mélange (2), d'un coussinet en feuille (5) destructible rempli par la substance coulante (6) et placé dans la seconde partie (4), et la résistance à la déchirure du coussinet en feuille et l'intensité du choc de pression que reçoit le pilon (7) lorsqu'on secoue le récipient mélangeur dans un dispositif de mélange vibratoire étant ajustées mutuellement de façon que le coussinet en feuille soit détruit à l'impact du pilon, caractérisé en ce que le pilon (7) comporte, au moins dans la zone terminale située du côté du coussinet en feuille (5), des éléments de guidage (9), et en ce que la face frontale (10) du pilon (7) située du côté de la cloison de séparation (5a), a une conformation complémentaire de celle de la paroi frontale intérieure (4a) de la seconde partie de récipient (4).

2. Récipient mélangeur selon la revendication 1, caractérisé en ce que la cloison de séparation (5a) du coussinet en feuille (5), située du côté de la chambre de mélange (2), comporte un emplacement destiné à la rupture.

3. Récipient mélangeur selon la revendication 1, caractérisé en ce que le pilon (7) comporte un relief (8) sur sa face frontale situé du côté du coussinet en feuille, pour renforcer le choc de pression.

4. Récipient mélangeur selon la revendication 3, caractérisé en ce que le relief (8) constitue une pointe.

5. Récipient mélangeur selon la revendication 1, caractérisé en ce que les éléments de guidage (9) constituent des nervures radiales.

6. Récipient mélangeur selon l'une des revendications 1 à 5, caractérisé en ce que les bords du coussinet en feuille (5) sont enserrés entre la première partie du récipient en forme de capuchon (1) et la seconde partie en forme de capuchon (4).

7. Récipient mélangeur selon l'une des revendications 1 à 6, caractérisé en ce que le coussinet en feuille (5) est constitué par une pellicule d'aluminium recouverte de matière thermoplastique.

## Claims

1. Mixing receptacle for the separate storage and mixing of substances (3, 6) reacting together to produce dental preparations, in particular amalgams, including a first receptacle portion (1) constructed as a mixing chamber (2) in which there is a generally pulverulent substance (3), a second removable receptacle portion (4) in which there is a flowable substance (6) separated from the mixing chamber by a partition wall (5a) and a movable, elongate pestle (7) in the mixing chamber, whereby the partition wall (5a) is formed by the wall directed away from the mixing chamber (2) of a destructable film cushion (5) filled with the flowable substance (6) and disposed in the second receptacle portion (4) and the tearing strength of the film cushion and the magnitude of the pressure impulse which the pestle (7) receives when the mixing receptacle is shaken in a vibratory mixing device are so matched to one another that the film cushion is destroyed when the pestle impinges on it, characterised in that the pestle (7) is provided with guide elements (9) at least in the end region directed towards the film cushion (5) and that the end face (10) directed towards the partition wall (5a) of the pestle (7) is constructed complementarily to the inner end wall (4a) of the second receptacle portion (4).

2. Mixing receptacle as claimed in claim 1, characterised in that the partition wall (5a) directed towards the mixing chamber (2) of the film cushion (5) is provided with a predetermined breaking point.

3. Mixing receptacle as claimed in claim 1, characterised in that the pestle (7) is provided with a projection (8) on the end face directed towards the film cushion to increase the pressure impulse.

4. Mixing receptacle as claimed in claim 3, characterised in that the projection (8) is a spike.

5. Mixing receptacle as claimed in claim 1, characterised in that the guide elements (9) are radial ribs.

6. Mixing receptacle as claimed in one of claims 1 to 5, characterised in that the edges of the film cushion (5) are clamped between the first (1) and the second (4) cap-shaped receptacle portions.

7. Mixing receptacle as claimed in one of claims 1 to 6, characterised in that the film cushion (5) is manufactured from aluminium foil coated with thermoplastic plastics material.

FIG.1

FIG.2